# FASCICULE DE BREVET EUROPEEN

(11) **EP 0 545 005 B1**
(45) Date de publication et mention de la délivrance du brevet: **12.06.1996**
(21) Numéro de dépôt: 92115047.0
(22) Date de dépôt: 03.09.1992
(51) Int. Cl.: G01P 13/00

(54) **Dispositifs de contrôle de l'écoulement d'un produit et procédé d'utilisation**
Vorrichtung zur Überwachung des Strömens eines Produktes sowie Verfahren zu seiner Anwendung
Apparatus for monitoring the flow of a product and method for using such an apparatus

(30) Priorité: 01.11.1991 CH 3200/91
(43) Date de publication de la demande: 09.06.1993
(73) Titulaire: SOCIETE DES PRODUITS NESTLE S.A., CH-1800 Vevey (CH)
(72) Inventeur: Chidley, Richard, CH-1143 Essert-s-/Champvent (CH)
(74) Mandataire: Thomas, Alain

(56) Documents cités:
- DE-A- 3 921 231
- US-A- 4 390 760

## Description

La présente invention traite de dispositifs de contrôle de l'écoulement d'un produit à l'intérieur d'un moyen d'écoulement.

Afin de protéger les dispositifs assurant le pompage d'un produit, par exemple pour l'amener d'une cuve de stockage à un mélangeur, et donc leur éviter une marche à vide, notamment lors d'un changement de cuve, il est nécessaire de contrôler la présence, à l'intérieur du moyen d'écoulement, du produit pompé.
Il est possible, à cet effet, d'utiliser un détecteur constitué de deux électrodes droites ou concentriques, qui peuvent être placées dans une ouverture pratiquée dans la paroi du moyen d'écoulement.
On peut alors déterminer l'impédance ou la résistance du produit circulant à l'intérieur du moyen d'écoulement, et en déduire si ledit moyen est rempli ou vide (appareil appelé "Vacutester" de la Société Suisse Endress et Hauser).
L'inconvénient de ce détecteur est qu'il peut donner une information erronée si une petite quantité du produit s'écoulant reste accrochée entre les deux électrodes.

La présente invention a pour but de pallier cet inconvénient, et propose deux dispositifs de contrôle de l'écoulement d'un produit à l'intérieur d'un moyen d'écoulement, selon que le moyen d'écoulement est en matériau conducteur ou en matériau non conducteur de l'électricité.

On appelle ci-après "moyen d'écoulement conducteur", un moyen d'écoulement en un matériau conducteur de l'électricité, et "moyen d'écoulement non conducteur", un moyen d'écoulement en un matériau non conducteur de l'électricité.

Ainsi un premier objet de l'invention, est un dispositif de contrôle de l'écoulement d'un produit conducteur de l'électricité à l'intérieur d'un moyen d'écoulement en un matériau conducteur de l'électricité, comprenant les caractéristiques de la revendication 1.

Un deuxième objet de l'invention est un dispositif de contrôle de l'écoulement d'un produit conducteur de l'électricité à l'intérieur d'un moyen d'écoulement en un matériau non conducteur de l'électricité, comprenant les caractéristiques de la revendication 2.

Les dispositifs selon la présente invention peuvent être utilisés en relation avec tout type de produit, quelque soit sa viscosité et/ou sa vitesse d'écoulement, à la seule condition que ce produit soit conducteur de l'électricité.
Ces dispositifs peuvent entre autre être utilisés dans l'industrie alimentaire, pour des produits présentant une viscosité de 10⁻³ à 10² Pa.s, s'écoulant à une vitesse pouvant être faible, de l'ordre de 1 mètre par seconde.

Les dispositifs selon la présente invention font partie intégrante du moyen d'écoulement, et ne créent donc pas d'aspérités telles que des bornes d'électrodes, sur la surface intérieure dudit moyen.
Un avantage en découlant est que ces dispositifs permettent d'éviter les pertes de charge générées par les dispositifs selon l'art antérieur.
Un autre avantage en découlant est que ces dispositifs ne gênent pas le nettoyage du moyen d'écoulement, d'où une hygiène accrue.

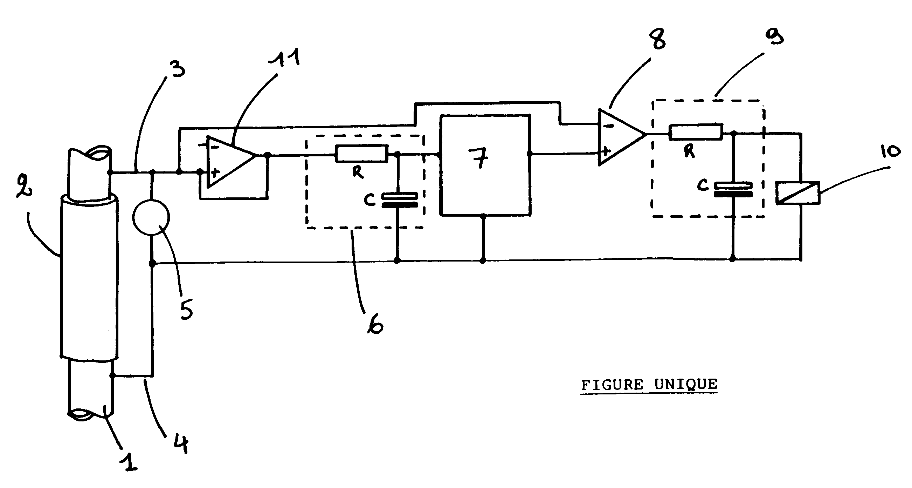

D'autres objets, caractéristiques et avantages de l'invention apparaîtront plus clairement à la lecture de la description suivante, faite en relation avec le dessin joint dans lequel la figure 1 représente un schéma de principe d'un dispositif de contrôle conforme à l'invention.

Le principe sur lequel repose l'invention est décrit ci-après dans le cadre d'un dispositif de contrôle placé sur un moyen d'écoulement en un matériau conducteur de l'électricité.

On remplace une partie du moyen d'écoulement conducteur, par une partie équivalente en un matériau non conducteur de l'électricité (ci-après appelé moyen d'écoulement non conducteur).
Il est aussi possible d'insérer un moyen d'écoulement non conducteur entre deux parties du moyen d'écoulement conducteur, par exemple lors de sa fabrication.
On peut par exemple remplacer 0,1 à 1,5 m d'un moyen d'écoulement en acier inoxydable, de 50 mm de diamètre, par un moyen d'écoulement de même dimension en matière plastique, telle que le polypropylène.
La jonction entre les moyens d'écoulement est de préférence effectuée de la manière la plus hermétique possible.

On fait alors passer, de manière continue, un faible courant électrique, par exemple de 5-50mA, ou l'on applique une tension continue ou alternative, de 1-20 Volts par exemple au produit s'écoulant à l'intérieur du moyen d'écoulement. On fait passer le courant électrique à l'aide de moyens de connexion, tels que des fils électriques, connectés au moyen d'écoulement conducteur, de part et d'autre du moyen d'écoulement non conducteur.

Des moyens électriques de mesure sont connectés aux moyens de connexion ci-dessus.
Ces moyens de mesure peuvent par exemple permettre la détermination de l'impédance ou de la résistance du produit s'écoulant dans le moyen d'écoulement, par mesure de la tension électrique générée dans le cas où l'on a fixé au préalable l'intensité du courant électrique, ou par mesure de l'intensité du courant électrique, dans le cas où l'on a fixé au préalable la tension électrique.
La grandeur électrique déterminée, caractéristique du produit s'écoulant, peut donc être la tension électrique, l'intensité du courant électrique ou l'impédance.

Lesdits moyens électriques de mesure peuvent donc être, par exemple, un voltmètre ou un ampèremètre.

On détermine, à l'aide de ces moyens électriques de mesure, une première valeur Ml d'une grandeur électrique M caractéristique du produit s'écoulant à l'intérieur du moyen d'écoulement non conducteur, à un temps t1. On peut déterminer par exemple l'impédance Z1 dudit produit, par mesure de la tension V1, connaissant l'intensité I1 du courant parcourant le produit.
Cette détermination est alors mise en mémoire.
A un temps t2, différent de t1, on détermine une deuxième valeur M2 de la grandeur électrique M. On peut ainsi par exemple déterminer l'impédance Z2 du produit s'écoulant, par mesure de la tension V2, pour une intensité I2 connue du courant électrique, I2 pouvant être différente de I1.

On compare alors M2 avec M1, et l'on peut arrêter l'écoulement du produit à l'aide d'un moyen de commande de l'écoulement, connecté auxdits moyens électriques de mesure, par exemple lorsque la différence entre M1 et M2 est inférieure, ou supérieure, à une valeur X préalablement déterminée.

En effet, la grandeur électrique déterminée permet de connaître la quantité et/ou la nature du produit s'écoulant.

Si l'on considère que la grandeur électrique déterminée est l'impédance, on constate que quand le moyen d'écoulement contient de l'air, parce que partiellement rempli par le produit, ce qui peut être le cas lorsque l'on commence ou que l'on finit de vider une cuve en amont, l'impédance déterminée est supérieure à l'impédance déterminée quand le moyen d'écoulement est rempli. Autrement dit, plus le moyen d'écoulement contient de produit, plus l'impédance est faible.
De façon analogue, l'impédance varie également en fonction de la nature du produit qui s'écoule, par exemple en fonction de sa résistivité. Il est ainsi possible de détecter si le moyen d'écoulement contient bien le produit à écouler, ou, par exemple, une solution de nettoyage.

L'invention est illustrée plus en détail par l'exemple d'utilisation du dispositif qui suit.

### Exemple

Soit un moyen d'écoulement 1, ci-après tuyau, en acier inoxydable , présentant un diamètre intérieur de 10 cm.

On remplace une portion du tuyau 1 par un moyen d'écoulement 2, de diamètre et de longueur équivalents à la portion du tuyau remplacée, en polypropylène.

On connecte au tuyau 1 deux fils électriques 3 et 4, disposés de part et d'autre du moyen d'écoulement 2. Les deux fils électriques sont d'autre part connectés à une source de courant 5, qui applique, en continu, un courant électrique d'intensité 10 mA au produit s'écoulant à l'intérieur du tuyau.
Un suiveur de tension 11 permet d'éviter que le circuit "amont", (situé à gauche sur la figure) n'influence et (ou ne perturbe le circuit "aval" (à droite sur la figure).
Un filtre 6 permet de mettre en forme les signaux de manière à supprimer les perturbations extérieures. Il permet également d'obtenir une valeur moyenne des signaux.
On détermine ainsi une première valeur V1 de la tension générée, à un temps t1.
Cette valeur est mise en mémoire, dans la mémoire 7.
A un temps t2=t1 + 4 minutes, on détermine une deuxième valeur V2 de la tension générée.

Un comparateur 8 effectue une comparaison entre V1 et V2. Lorsque la différence V2-V1 est inférieure, ou supérieure, à une valeur X préalablement déterminée, un signal est envoyé au relais 10.
Entre le comparateur 8 et le relais 10, on peut disposer un circuit retardateur 9.
Le relais 10 est relié à l'élément de commande de la pompe, et permet ainsi d'arrêter l'écoulement à l'intérieur du tuyau.
Il est possible de disposer un "timer" (non représenté) dans le dispositif, de manière à mettre hors-circuit ledit dispositif pendant les 5 ou 10 premières minutes de son utilisation, ce qui permet de ne déterminer les valeurs V que lorsque le système est à l'état d'équilibre.

## Revendications

1. Dispositif de contrôle de l'écoulement d'un produit conducteur de l'électricité à l'intérieur d'un moyen d'écoulement en un matériau conducteur de l'électricité, comprenant:
- un moyen d'écoulement en un matériau non conducteur de l'électricité, disposé hermétiquement à la place d'une partie dudit moyen d'écoulement conducteur,
- des moyens de connexion, connectés audit moyen d'écoulement conducteur et disposés de part et d'autre dudit moyen d'écoulement non conducteur,
- des moyens électriques de mesure, connectés auxdits moyens de connexion, et adaptés à permettre une première détermination M1 d'une valeur d'une grandeur électrique caractéristique du produit s'écoulant à l'intérieur du moyen d'écoulement non conducteur à un temps t1, une deuxième détermination M2 d'une valeur de la même grandeur électrique caractéristique du produit s'écoulant à l'intérieur du moyen d'écoulement non conducteur à un temps t2 différent de t1, et une comparaison entre les valeurs déterminées M1 et M2, et
- un moyen de commande de l'écoulement du produit, connecté auxdits moyens électriques de mesure adapté à permettre l'arrêt de l'écoulement quand la différence entre les valeurs M1 et M2 est supérieure ou inférieure à une valeur X préalablement déterminée.

2. Dispositif de contrôle de l'écoulement d'un produit conducteur de l'électricité à l'intérieur d'un moyen d'écoulement en un matériau non conducteur de l'électricité, comprenant:
- au moins deux moyens d'écoulement, en un matériau conducteur de l'électricité, disposés hermétiquement, de part et d'autre d'une partie du moyen d'écoulement non conducteur,
- des moyens de connexion, connectés auxdits moyens d'écoulement conducteurs,
- des moyens électriques de mesure, connectés auxdits moyens de connexion, adaptés à permettre une première détermination M1 d'une grandeur électrique caractéristique du produit s'écoulant à l'intérieur du moyen d'écoulement non conducteur à un temps t1, une deuxième détermination M2 de la même grandeur électrique caractéristique du produit s'écoulant à l'intérieur du moyen d'écoulement non conducteur à un temps t2 différent de t1, et une comparaison entre les valeurs déterminées M1 et M2, et
- un moyen de commande de l'écoulement du produit, connecté auxdits moyens électriques de mesure, adapté à permettre l'arrêt de l'écoulement, quand la différence entre les valeurs M1 et M2 est supérieure ou inférieure à une valeur X préalablement déterminée.

3. Procédé de contrôle de l'écoulement d'un produit conducteur de l'électricité à l'intérieur d'un moyen d'écoulement, à l'aide du dispositif selon l'une des revendications 1 et 2, dans lequel:
- on fait passer un courant électrique dans le produit s'écoulant,
- on détermine une première valeur M1 d'une grandeur électrique M caractéristique du produit s'écoulant à l'intérieur du moyen d'écoulement non conducteur, à un temps t1,
- on mémorise M1,
- on détermine une deuxième valeur M2 de la grandeur M caractéristique du produit s'écoulant à l'intérieur du moyen d'écoulement non conducteur, à un temps t2 différent de t1, et
- on arrête l'écoulement du produit quand la différence entre les valeurs M1 et M2 est supérieure ou inférieure à une valeur X préalablement déterminée.

## Patentansprüche

1. Vorrichtung zur Überwachung des Flusses eines elektrisch leitenden Produkts im Inneren einer Durchflußeinrichtung aus elektrisch leitendem Werkstoff, umfassend:
- eine Durchflußeinrichtung aus einem elektrisch nicht leitenden Werkstoff, die an der Stelle eines Teils dieser leitenden Durchflußeinrichtung hermetisch eingesetzt ist,
- Anschlußmittel, die an die leitende Durchflußeinrichtung angeschlossen sind und zu beiden Seiten der nicht leitenden Durchflußeinrichtung angeordnet sind,
- eine elektrische Meßeinrichtung, die an diese Anschlußmittel angeschlossen ist und so ausgelegt ist, daß sie eine erste Bestimmung M1 eines Werts einer elektrischen Größe, die für das im Inneren der nicht leitenden Durchflußeinrichtung fließende Produkt charakteristisch ist, zu einer Zeit t1, eine zweite Bestimmung M2 eines Werts derselben elektrischen Größe, die für das im Inneren der nicht leitenden Durchflußeinrichtung fließende Produkt charakteristisch ist, zu einer von t1 abweichenden Zeit t2 und einen Vergleich zwischen den bestimmten Werten M1 und M2 gestattet, und
- eine Einrichtung zur Steuerung des Produktflusses, die an diese elektrische Meßeinrichtung angeschlossen ist und so ausgelegt ist, daß sie die Unterbrechung des Flusses gestattet, wenn die Differenz zwischen den Werten M1 und M2 größer oder kleiner als ein zuvor festgelegter Wert X ist.

2. Vorrichtung zur Überwachung des Flusses eines elektrisch leitenden Produkts im Inneren einer Durchflußeinrichtung aus einem elektrisch nicht leitenden Werkstoff, umfassend:
- mindestens zwei Durchflußeinrichtungen aus einem elektrisch leitenden Werkstoff, die zu beiden Seiten eines Teils der nichtleitenden Durchflußeinrichtung hermetisch eingesetzt sind,
- Anschlußmittel, die an diese leitenden Durchflußeinrichtungen angeschlossen sind,
- eine elektrische Meßeinrichtung, die an diese Anschlußmittel angeschlossen ist und so ausgelegt ist, daß sie eine erste Bestimmung M1 einer elektrischen Größe, die für das im Inneren der nicht leitenden Durchflußeinrichtung fließende Produkt charakteristisch ist, zu einem Zeitpunkt t1, eine zweite Bestimmung M2 derselben elektrischen Größe, die für das im Inneren der nicht leitenden Durchflußeinrichtung fließende Produkt charakteristisch ist, zu einer von t1 abweichenden Zeit t2 und einen Vergleich zwischen den bestimmten Werten M1 und M2 gestattet, und
- eine Einrichtung zur Steuerung des Produktflusses, die an diese elektrische Meßeinrichtung angeschlossen ist und so ausgelegt ist, daß sie die Unterbrechung des Flusses gestattet, wenn die Differenz zwischen den Werten M1 und M2 größer oder kleiner als ein zuvor festgelegter Wert ist.

3. Verfahren zur Überwachung des Flusses eines elektrisch leitenden Produkts im Inneren einer Durchflußeinrichtung mit Hilfe einer Vorrichtung nach einem der Ansprüche 1 und 2, in welchem man
- in dem fließenden Produkt einen elektrischen Strom fließen läßt,
- einen ersten Wert M1 einer elektrischen Größe M2, die für das im Inneren der nicht leitenden Durchflußeinrichtung fließende Produkt charakteristisch ist, zu einer Zeit t1 bestimmt,
- M1 speichert,
- einen zweiten Wert M2 der Größe M, die für das im Inneren der nicht leitenden Durchflußeinrichtung fließende Produkt charakteristisch ist, zu einer von t1 abweichenden Zeit t2 bestimmt und
- den Produktfluß unterbricht, wenn die Differenz zwischen den Werten M1 und M2 größer oder kleiner als ein zuvor festgelegter Wert X ist.

## Claims

1. Device for monitoring the flow of an electrically conducting product inside a means of flow made of an electrically conducting material, comprising :
- a means of flow made of an electrically non-conducting material, hermetically disposed in place of a part of the said conducting means of flow,
- means of connection, connected to the said conducting means of flow and arranged either side of the said non-conducting means of flow,
- electrical means of measurement, connected to the said means of connection, and suitable for enabling a first determination M1 to be obtained of a value of an electrical property characteristic of the product flowing inside the non-conducting means of flow at a time t1, a second determination M2 to be obtained of a value of the same electrical property characteristic of the product flowing inside the non-conducting means of flow at a time t2 different from t1, and a comparison to be obtained between the values M1 and M2 determined, and
- a means of controlling the flow of the product, connected to the said electrical means of measurement, suitable for enabling the flow to be stopped when the difference between the values M1 and M2 is greater or less than a previously determined value X.

2. Device for monitoring the flow of an electrically conducting product inside a means of flow made of an electrically non-conducting material, comprising :
- at least two means of flow made of an electrically conducting material, hermetically disposed either side of a part of the non-conducting means of flow,
- means of connection, connected to the said conducting means of flow,
- electrical means of measurement, connected to the said means of connection, suitable for enabling a first determination M1 to be obtained of an electrical property characteristic of the product flowing inside the non-conducting means of flow at a time t1, a second determination M2 to be obtained of the same electrical property characteristic of the product flowing inside the non-conducting means of flow at a time t2 different from t1, and a comparison to be obtained between the values M1 and M2 determined, and
- a means of controlling the flow of the product, connected to the said electrical means of measurement, suitable for enabling the flow to be stopped when the difference between the values M1 and M2 is greater or less than a previously determined value X.

3. Process for monitoring the flow of an electrically conducting product inside a means of flow, with the aid of a device according to either of claims 1 or 2, in which :
- an electric current is passed through the flowing product,
- a first value M1 is determined of an electrical property M characteristic of the product flowing inside the non-conducting flow device, at a time t1,
- M1 is stored in the memory,
- a second value M2 is determined of the property M characteristic of the product flowing inside the non-conducting flow device, at a time t2 different from t1, and
- the flow of the product is stopped when the difference between the values M1 and M2 is greater or less than a previously determined value X.
